# EUROPEAN PATENT APPLICATION

(11) **EP 1 455 026 A1**
(43) Date of publication of application: **08.09.2004**
(21) Application number: 03014590.8
(22) Date of filing: 08.07.2003
(51) Int. Cl.: E03F 7/10, B01D 45/12

(54) **Apparatus for generating vacuum inside waste accumulation tanks**

(30) Priority: 04.03.2003 IT PD20030015
(71) Applicant: Cappellotto S.p.A., 31018 Gaiarine (Triviso) (IT)
(72) Inventor: Cappellotto, Luigi, 31018 Gaiarine (Prov.of Treviso) (IT)
(74) Representative: Modiano, Guido, Dr.-Ing.

(57) **Abstract**

An apparatus for generating vacuum inside waste accumulation tanks comprising liquid-ring vacuum means (11a) that are arranged between a waste accumulation tank (11) and the atmospheric environment; a first gas/liquid separator device (13) is arranged between the tank (11) and the liquid-ring vacuum means (11a) and is functionally connected for liquid discharge to the tank (11); a decantation device (18) is arranged between the atmospheric environment and the liquid-ring vacuum means (11a) and is functionally connected for liquid discharge to the liquid-ring vacuum means (11a); a second gas/liquid separator device (19), which is functionally connected for liquid discharge to the liquid-ring vacuum means (11a), is arranged between the decantation device (18) and the atmospheric environment.

## Description

The present invention relates to an apparatus for generating vacuum inside waste accumulation tanks.

Currently, tanker trucks provided with a suction apparatus are generally used to empty septic tanks, sewage traps, et cetera.

The waste is aspirated through an intake hose that is connected to the tank and can be orientated by a swinging guiding arm that is fixed externally to the tank.

Suction is provided by negative pressure inside the tank by means of a vacuum generation apparatus, which comprises liquid-ring vacuum means, such as for example a liquid-ring vacuum pump.

The use of a liquid-ring pump ensures high negative pressures.

In this apparatus, the liquid-ring pump is arranged between the waste accumulation tank and the atmospheric environment.

A gas/liquid separator cyclone is generally present between the tank and the pump and is functionally connected to the upper part of the tank by means of piping.

The need for the separator cyclone arises from the fact that the gas inside the tank is saturated with water particles.

These water particles must not be discharged into the outside environment, both for hygiene-related reasons and for safety reasons: in winter, such particles can in fact freeze in falling to the ground and constitute a danger for pedestrians and possibly for drivers.

The liquid fraction that has separated in the separator cyclone returns into the accumulation tank by means of additional piping.

A decantation device is present between the atmospheric environment and the delivery of the pump.

The need for this decantation device arises from the fact that the liquid-ring pump, during its operation, must always be fed with the working liquid in order to remove the heat generated by the compression of the air and to top up the liquid ring, since part of said liquid is expelled with the air at the delivery.

Said liquid is typically a mixture of water and antifreeze.

For this reason, the decantation device acts as a tank for the liquid-ring pump and as a device for decanting the liquid with respect to the air; the liquid in fact must not reach the outside environment, since it would pollute said environment due to the antifreeze.

The liquid-ring pump draws by suction the mixture of water and antifreeze from the decantation device by means of a top-up duct.

This type of vacuum generation system, although being available commercially for several years in the field of waste management machines, is not free from drawbacks.

The quantity of particles of liquid with antifreeze that is discharged into the outside environment with the gas aspirated from the waste accumulation tank is in fact still too high for the hygiene and safety standards required for these kinds of waste management machine; the decantation device is in fact unable to eliminate all the particles of liquid from the discharge into the environment.

This is particularly true in feeding steps in which a substantial percentage of vacuum inside the waste accumulation tank has not yet been established; in these steps, the flow-rate of the pump is at its maximum and the percentage of liquid that is present in the gas at the delivery of the liquid-ring pump is considerable.

The aim of the present invention is to provide an apparatus for generating vacuum inside waste accumulation tanks that solves the problems noted above in known types of apparatus.

Within this aim, an object of the present invention is to provide an apparatus for generating vacuum inside waste accumulation tanks by way of liquid-ring means that eliminates completely the residual particles of liquid in the gas at the discharge into the atmospheric environment.

Another object of the present invention is to provide an apparatus for generating vacuum inside waste accumulation tanks that can be manufactured with known equipment and technologies.

This aim and these and other objects that will become better apparent hereinafter are achieved by an apparatus for generating vacuum inside waste accumulation tanks, which comprises liquid-ring vacuum means that are arranged between a waste accumulation tank and the atmospheric environment, a first gas/liquid separator device being arranged between said tank and said liquid-ring vacuum means and being functionally connected for liquid discharge to said tank, a decantation device being arranged between the atmospheric environment and said liquid-ring vacuum means and being functionally connected for liquid discharge to said liquid-ring vacuum means, said apparatus being characterized in that it comprises at least one second gas/liquid separator device, which is functionally connected for liquid discharge to said liquid-ring vacuum means and is arranged between said decantation device and the atmospheric environment.

Further characteristics and advantages of the invention will become better apparent from the following detailed description of a preferred but not exclusive embodiment thereof, illustrated by way of non-limitative example in the accompanying drawings, wherein:

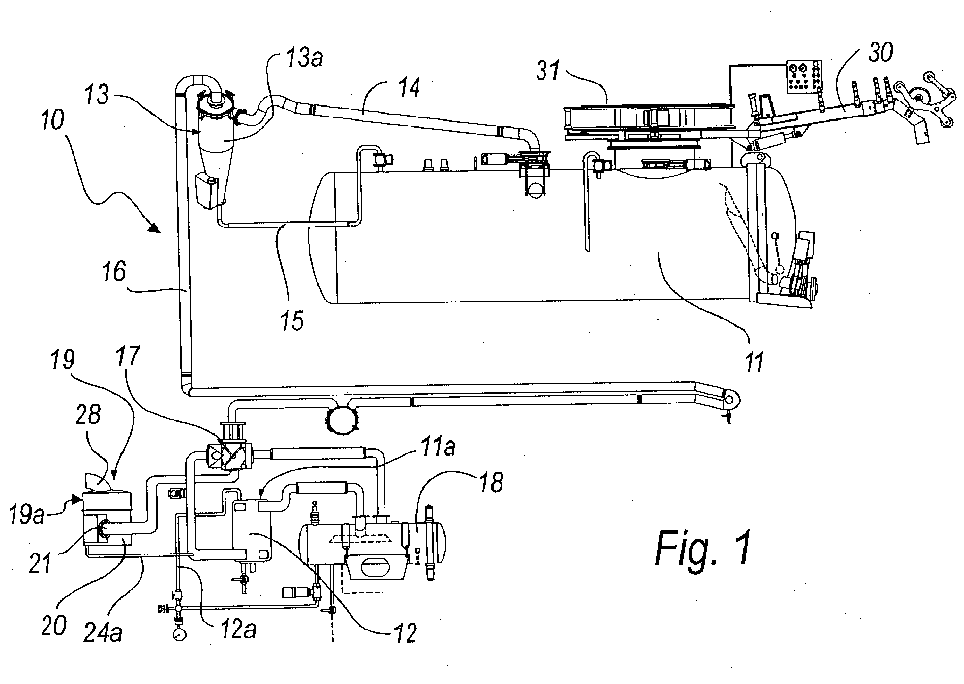

Figure 1 is a diagram of a vacuum generation system according to the invention;

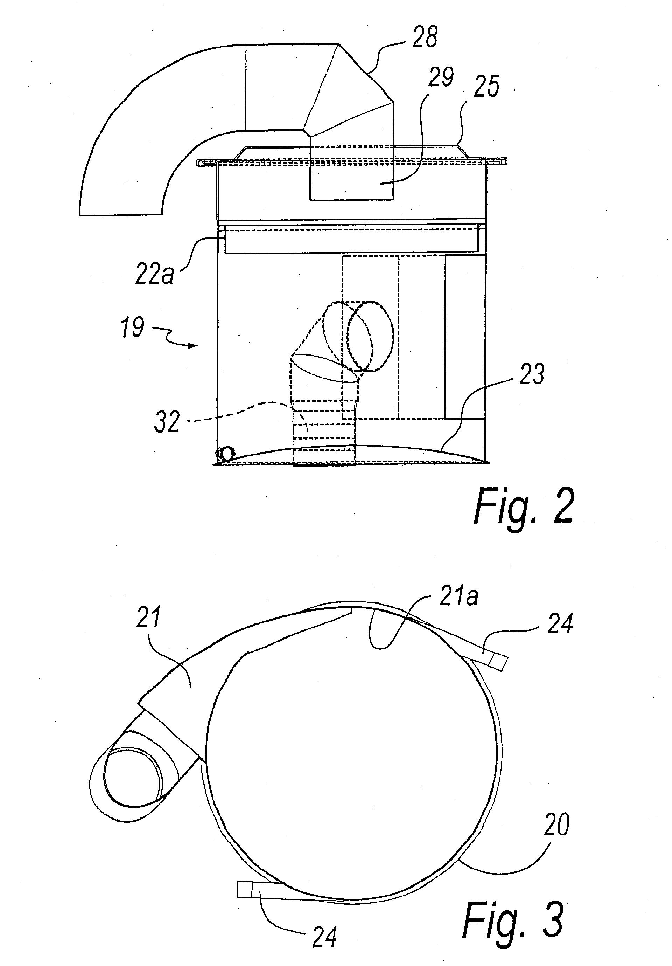

Figure 2 is a sectional front view of a gas/liquid separator device provided in the apparatus according to the invention;
Figure 3 is a sectional plan view of the device of Figure 2.

With reference to the figures, an apparatus according to the invention is generally designated by the reference numeral 10.

The apparatus 10 comprises liquid-ring vacuum means 11a, which are arranged between a waste accumulation tank 11 and the atmospheric environment and are constituted, in this embodiment, by a liquid-ring vacuum pump 12.

A first gas/liquid separator device 13 is arranged between the tank 11 and the liquid-ring pump 12 and is constituted by a separator cyclone with a conical bottom 13a.

The cyclone 13a is functionally connected, by means of its inlet, to the upper part of the tank 11 by way of a first duct 14 and is functionally connected for liquid discharge to the tank 11 by way of a second duct 15.

A decantation device 18 is provided between the atmospheric environment and the liquid-ring pump 12.

In particular, the inlet of the decantation device 18 is connected to the delivery of the pump 12.

The liquid-ring pump 12, during its operation, must always be supplied with working liquid (water mixed with antifreeze) in order to remove the heat generated by the compression of the gas and to top up the liquid ring, since part of the liquid is expelled at the delivery with the gas.

For this reason, the pump is also connected at the inlet to the decantation device 18 by way of a top-up duct 12a, which thus acts as a tank for the pump.

At the same time, the decantation device 18 allows to decant the liquid, which has mixed inside the pump 12 with the gas that arrives from the cyclone 13a.

The outlet of the cyclone 13a is connected, by way of a third duct 16, to a four-way valve 17, which during standard operation functionally connects the cyclone 13a to the inlet of the liquid-ring pump 12 and further connects the outlet of the decantation device 18 to a second gas/liquid separator device 19, which is constituted by a gas/liquid separator cyclone 19a.

The cyclone 19a comprises a cylindrical box-like body 20, which is provided laterally with an inlet duct 21, through which the fluid enters substantially tangentially to the internal wall 21a of the box-like body.

In an intermediate position (at approximately three quarters) of the vertical extension of the box-like body 20 there is an annular cavity 22a.

The box-like body 20 has a bottom 23 that is cambered upward in order to collect the liquid that separates from the gas, and two ducts 24 for the discharge of the liquid that branch out from the bottom and are functionally connected by means of a pipe 24a to the inlet of the pump 12.

In an upper region, the box-like body 20 is provided with a lid 25 that is coupled by means of a flange to the box-like body.

An outlet duct 28 exits from the top of the lid 25. and is functionally connected to the atmospheric environment.

The outlet duct 28 has a right-angled bend and its intake end 29 protrudes into the box-like body 20.

The inlet duct 21 is provided externally with a fitting 32 for coupling to a corresponding pipe for connection to the apparatus.

The operation of the apparatus is as follows.

The waste is aspirated through a suction hose (not shown in the figures), which is connected to the tank 11 and can be orientated by means of a swinging guiding arm 30, which is fixed externally to the tank 11.

When the hose is not collecting, it is generally wound on a reel 31, which is also mounted externally to the tank 11.

Suction is provided by means of negative pressure inside the tank by way of the liquid-ring pump 12.

Gas (a mixture of air and gases generated by the decomposition of the biological elements that are present in the waste products) rich in atomized water particles present inside the tank is aspirated from the tank.

The gas, from the tank 11, enters the separator cyclone with conical bottom 13a; inside it, the water particles rotate around the walls until they descend onto the conical bottom, where the duct 15 is present; said duct discharges the particles back into the tank 11, while the gas, thus deprived of the particles, exits from above and reaches the four-way valve 17 through the duct 16.

The valve 17 routes the gas toward the inlet of the liquid-ring pump 12, which by mixing it with the working liquid of the pump (water and antifreeze) sends it into the decantation device 18.

In the device 18, the liquid that had mixed with the gas and water is made to decant on the bottom, while the gas is "propelled" again toward the four-way valve 17.

However, the gas is not entirely free of liquid, and for this reason it is routed by the four-way valve 17 toward the inlet of the separator cyclone 20, whose operation is similar to the operation of the cyclone with conical bottom 13a; the gas enters tangentially to the cylindrical wall of the cyclone and rotates around the wall toward the bottom; by way of this movement, the gas separates from the water-antifreeze liquid and rises, exiting into the atmospheric environment from the outlet duct 28.

The liquid thus separated is discharged by means of the duct 24a into the pump 12, topping up the liquid ring.

The pump 12 further tops up its liquid ring by drawing, by way of the top-up duct 12a, from the bottom of the decantation device 18.

In practice it has been found that the invention thus described solves the problems noted in known types of vacuum generation system applied to waste management machines; in particular, the present invention provides an apparatus for generating vacuum inside waste accumulation tanks that eliminates completely the particles of liquid at the discharge, into the atmospheric environment, of the gas aspirated from the waste accumulation tank.

Moreover, the present invention provides a gas/liquid separator provided with a flat bottom that is well suited to be used to separate particles of liquid from gas in apparatuses for generating vacuum inside waste accumulation tanks by way of liquid-ring means.

In practice, the materials used, so long as they are compatible with the specific use, as well as the dimensions, may be any according to requirements and to the state of the art.

The disclosures in Italian Utility Model Application No. PD2003U000015 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for generating vacuum inside waste accumulation tanks, comprising liquid-ring vacuum means (11a) that are arranged between a waste accumulation tank (11) and the atmospheric environment, a first gas/liquid separator device (13) being arranged between said tank (11) and said liquid-ring vacuum means (11a) and being functionally connected for liquid discharge to said tank (11), a decantation device (18) being arranged between the atmospheric environment and said liquid-ring vacuum means (11a) and being functionally connected for liquid discharge to said liquid-ring vacuum means (11a), said apparatus being **characterized in that** it comprises at least one second gas/liquid separator device (19), which is functionally connected for liquid discharge to said liquid-ring vacuum means (11a) and is arranged between said decantation device (18) and the atmospheric environment.

2. The apparatus according to claim 1, **characterized in that** said second gas/liquid separator device (19) is constituted by a separator cyclone (19a).

3. The apparatus according to claim 2, **characterized in that** said separator cyclone (19a) comprises a cylindrical box-like body (20) which is provided laterally with an inlet duct (21) through which the fluid enters substantially tangentially with respect to the inner wall (21a) of said box-like body (20) and is provided, in a lower region, with a collection bottom (23) from which two ducts (24) extend for the discharge of the substantially liquid fraction of said fluid, said cylindrical box-like body (20) being further provided in an upper region with a lid (25), from the top of which an outlet duct (28) protrudes.

4. The apparatus according to one or more of the preceding claims, **characterized in that** said liquid-ring vacuum means (11a) comprise a liquid-ring pump (12).

5. The apparatus according to one or more of the preceding claims, **characterized in that** said first gas/liquid separator device (13) is constituted by a separator cyclone which has a conical bottom (13a).

6. The apparatus according to one or more of the preceding claims, **characterized in that** it comprises a four-way valve (17), which is functionally connected to said first gas/liquid separator device (13), said liquid-ring vacuum means (11a), said decantation device (18) and said second gas/liquid separator device (19); said four-way valve (17) connecting, during standard operation, the outlet of said first gas/liquid separator device (13) to the inlet of said liquid-ring vacuum means (11a) and the outlet of said decantation device (18) to said second gas/liquid separator device (19).

7. A gas/liquid separator cyclone, **characterized in that** it comprises a cylindrical box-like body (20) which is provided laterally with an inlet duct (21), through which the fluid enters substantially tangentially to the inner wall (21a) of said box-like body (20) and is provided, in a lower region, with a collecting bottom (23) from which two ducts (24) protrude for the discharge of the substantially liquid fraction of said fluid, said cylindrical box-like body (20) being further provided with a lid (25) in an upper region, an outlet duct (28) protruding from the top of said lid (25).

8. The gas/liquid separator cyclone according to claim 7, **characterized in that** said lid (25) is coupled to said box-like body (20) by means of a flange.

9. The gas/liquid separator cyclone according to claim 8, **characterized in that** an annular cavity (22a) is formed in an intermediate position of the vertical extension of said box-like body (20).

10. The gas/liquid separator cyclone according to claim 7, **characterized in that** said outlet duct (28) has a right-angled bend and its intake end (29) protrudes into said box-like body (20).

11. The gas/liquid separator cyclone according to claim 7, **characterized in that** said inlet duct (21) is provided externally with a fitting (32) for coupling to a corresponding pipe for connection to the apparatus.

12. The gas/liquid separator cyclone according to claim 7, **characterized in that** said bottom (23) is cambered upward.
